# EUROPÄISCHE PATENTSCHRIFT

(11) **EP 1 907 891 B1**
(45) Veröffentlichungstag und Bekanntmachung des Hinweises auf die Patenterteilung: **09.09.2009**
(21) Anmeldenummer: 06762258.9
(22) Anmeldetag: 29.06.2006
(51) Int. Cl.: G02B 3/08, G01S 17/02, G01S 17/06, G01V 8/12, G02B 7/02, B29D 11/00

(54) **OPTISCHER SENSOR ZUR ERFASSUNG VON OBJEKTEN IN EINEM ÜBERWACHUNGSBEREICH**
OPTICAL SENSOR FOR DETECTING OBJECTS IN A MONITORING AREA
CAPTEUR OPTIQUE SERVANT A DETECTER DES OBJETS DANS UNE ZONE DE SURVEILLANCE

(30) Priorität: 28.07.2005 DE 202005011847 U
(43) Veröffentlichungstag der Anmeldung: 09.04.2008
(73) Patentinhaber: Leuze electronic GmbH + Co. KG, 73277 Owen/Teck (DE)
(72) Erfinder: ALDIEK, Norbert, 73230 Kirchheim/Teck (DE)
(74) Vertreter: Ruckh, Rainer Gerhard
(86) Internationale Anmeldenummer: PCT/EP2006/006285
(87) Internationale Veröffentlichungsnummer: WO 2007/012374

(56) Entgegenhaltungen:
- EP-A- 0 384 353
- US-A- 5 153 570
- PATENT ABSTRACTS OF JAPAN Bd. 014, Nr. 225 (E-0927), 14. Mai 1990 (1990-05-14) -& JP 02 058278 A (SHARP CORP), 27. Februar 1990 (1990-02-27)

## Beschreibung

Die Erfindung begriff einen optischen Sensor.

Derartige optische Sensoren dienen generell zur Erfassung von Objekten in einem Überwachungsbereich, wobei diese beispielsweise als Lichttaster, Reflexionslichtschranken, Distanzsensoren und dergleichen ausgebildet sein können. Die in einem Gehäuse integrierten Komponenten des optischen Sensors umfassen einen Sendelichtstrahlen emittierenden Sender, einen Empfangslichtstrahlen empfangenden Empfänger und eine Auswerteeinheit, in welcher aus den Empfangssignalen am Ausgang des Empfängers ein Objektfeststellungssignal generiert wird.

Als weitere Optikkomponenten sind typischerweise eine Sendeoptik zur Strahlformung der Sendelichtstrahlen und eine Empfangsoptik zur Fokussierung der Empfangslichtstrahlen auf den Empfänger vorgesehen. Diese Optikkomponenten sind üblicherweise als separate Linsen ausgebildet, die aus Glas oder Kunststoff bestehen können. Derartige Optikkomponenten erhöhen die Anzahl der Bauelemente des optischen Sensors, wobei generell für diese Optikkomponenten separate Halterungen und Aufnahmen zur Fixierung innerhalb des Gehäuses vorgesehen werden müssen.

Die Vielzahl der Komponenten des optischen Sensors führt zu einer unerwünschten Erhöhung des Montageaufwands und generell zu relativ hohen Herstellkosten des optischen Sensors.

Ein optischer Sensor mit den Merkmalen des Oberbegriffs des Anspruchs 1 ist aus der EP 0 384 353 A2 bekannt.

In der US 5,153,570 sind aus Kunststoff bestehende Optikelemente mit daran angeformten Halteelementen beschrieben, die in Digitalisiergeräten eingesetzt werden.

In der JP 020 58 278 sind aus Kunststoffspritzguss bestehende Optikelemente für photoelektrische Schalter beschrieben.

Der Erfindung liegt die Aufgabe zugrunde, die Herstellkosten eines optischen Sensors der eingangs genannten Art zu reduzieren, ohne hierbei dessen Nachweisempfindlichkeit zu reduzieren.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Der erfindungsgemäße optische Sensor dient zur Erfassung von Objekten in einem Überwachungsbereich. Dieser weist wenigstens einem Sendelichtstrahlen emittierenden Sender, wenigstens einen Empfangslichtstrahlen empfangenden Empfänger, eine Auswerteeinheit zur Generierung eines Objektfeststellungssignals in Abhängigkeit von am Ausgang des Empfängers anstehenden Empfangssignalen und ein aus einem Kunststoff-Spritzteil bestehendes Optikelement auf. Ein erstes und ein zweites Segment des Optikelements bilden wenigstens eine Fresnel-Linse zur Strahlformung der Sendelichtstrahlen und/oder Empfangslichtstrahlen. An das Optikelement schließt ein mit diesem einstückig ausgebildeter Lichtleiter-Kanal an, an dessen hinteren Stirnfläche des Lichtleiter-Kanals eine Leuchtdiode angesetzt ist, so dass von der Leuchtdiode emittierte sichtbare Lichtstrahlen im Lichtleiter-Kanal geführt und an der vorderen Stirnfläche des Lichtleiter-Kanals sichtbar sind, so dass diese Stirnfläche ein Anzeigeelement bildet.

Die aus Kunststoff-Spritzteilen bestehenden Optikelement können besonders rationell und kostengünstig hergestellt werden.

Die Ausbildung des Optikelements kann dabei flexibel an die Anordnung des Senders und des Empfängers angepasst werden, wobei insbesondere auch Mehrfachanordnungen derartiger Optikelemente für den Fall möglich sind, dass der optische Sensor mehrere Sender und/oder Empfänger aufweist.

In einer besonders vorteilhaften Ausführungsform weist das Kunststoff-Spritzteil als Optikelement zwei Fresnel-Linsen auf, wobei eine Fresnel-Linse eine Sendeoptik zur Strahlformung der Sendelichtstrahlen und eine Fresnel-Linse eine Empfangsoptik zur Fokussierung der Empfangslichtstrahlen auf den Empfänger bildet.

Mit derartigen Fresnel-Linsen können bei geringer Dicke der Optikelemente große numerische Aperturen und gute Abbildungsqualitäten erzielt werden. Da die Dicken der Optikelemente gering gehalten werden können, sind die Herstellkosten für derartige Optikelemente aufgrund der geringen Fertigungszeiten entsprechend gering. Dies beruht darauf, dass die Verweilzeiten von dünnen Kunststoff-Spritzteilen in den Spritzformen zu deren Herstellung erheblich geringer gehalten werden können als bei dickeren Teilen.

Das Kunststoff-Spritzteil kann prinzipiell aus PMMA (Polymethylmethacrylat) bestehen. Besonders vorteilhaft besteht das Kunststoff-Spritzteil aus Polycarbonat, welches im Vergleich zu PMMA eine höhere Brechzahl aufweist. Durch die erhöhte Brechzahl kann die Dicke der Fresnel-Linsen bei gleichen optischen Eigenschaften weiter verringert werden.

Da die Fresnel-Linsen Bestandteil eines Kunststoff-Spritzteils sind, wird auch der Einbau der Fresnel-Linsen im Gehäuse erheblich vereinfacht, da separate Halterungen und der damit verbundene Mehrarbeiten zur Montage einzelner Linsen entfallen können. Die Fresnel-Linsen als Bestandteil des Kunststoff-Spritzteils brauchen nicht einzeln ausgerichtet werden sondern können als Baueinheit innerhalb des Gehäuses, in welchem der optische Sensor integriert ist, montiert werden. Besonders vorteilhaft weist das Kunststoff-Spritzteil hierzu als weitere Elemente Halterungen, die insbesondere Rastmittel bilden, auf, so dass mit diesen die Optikelemente in einem Montageschritt innerhalb des Gehäuses fixiert werden können. Da die Halterungen als Bestandteil des Kunststoff-Spritzteils einstückig mit dem Optikelement ausgebildet sind, wird eine weitere Reduzierung der Anzahl der einzelnen Bauteile des optischen Sensors erhalten.

Die Funktionalität des Kunststoff-Spritzteils kann vorteilhaft dadurch noch erweitert werden, dass dieses als weiteren Bestandteil einen Lichtleiter-Kanal aufweist, der Bestandteil einer Statusanzeige des optischen Sensors ist. Durch diesen Lichtleiter-Kanal können die Lichtstrahlen einer Leuchtdiode geführt werden, so dass diese als optische Signale an der Außenseite des Gehäuses des optischen Sensors sichtbar sind.

Der erfindungsgemäße optische Sensor kann generell als messender Sensor, beispielsweise als Distanzsensor ausgebildet sein, bei welchem als Objektfeststellungssignal ein analoger Messwert generiert wird. Weiterhin kann der erfindungsgemäße optische Sensor als binäres Schaltgerät, beispielsweise als Lichttaster oder Reflexionslichtschranke ausgebildet sein. In diesem Fall wird im optischen Sensor ein Objektfeststellungssignal in Form eines binären Schaltsignals generiert, dessen Schaltzustände angeben, ob sich ein Objekt im Überwachungsbereich befindet oder nicht.

Die Erfindung wird im Nachstehenden anhand der Zeichnungen erläutert. Es zeigen:
- Figur 1:: Schematische Darstellung eines Ausführungsbeispiels des erfindungsgemäßen optischen Sensors.
- Figur 2:: Erste Seitenansicht eines Kunststoff-Spritzteils zur Ausbildung von Optikelementen für den optischen Sensor gemäß Figur 1.
- Figur 3:: Zweite Seitenansicht des Kunststoff-Spritzteils.
- Figur 4:: Draufsicht auf das Kunststoff-Spritzteil gemäß Figuren 2 und 3.

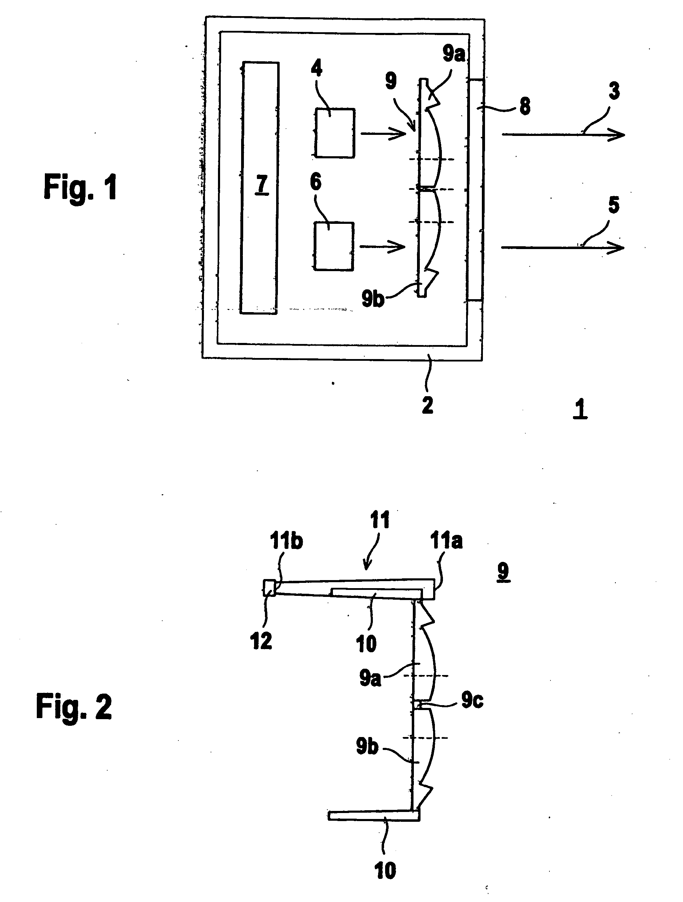

Figur 1 zeigt schematisch den Aufbau eines optischen Sensors 1 zur Erfassung von Objekten in einem Überwachungsbereich. Im vorliegenden Fall ist der optische Sensor 1 als Lichttaster ausgebildet. Die Komponenten des optischen Sensors 1 sind in einem Gehäuse 2 integriert. Der optische Sensor 1 weist einen Sendelichtstrahlen 3 emittierenden Sender 4 und einen Empfangslichtstrahlen 5 empfangenden Empfänger 6 auf, welche an eine Auswerteeinheit 7 angeschlossen sind. Die von einem Mikroprozessor oder dergleichen gebildete Auswerteeinheit 7 dient zur Steuerung des Senders 4 und zur Auswertung der Empfangssignale des Empfängers 6.

In der Frontwand befindet sich ein Austrittsfenster 8. Durch das Austrittsfenster 8 werden die Sendelichtstrahlen 3 in den Überwachungsbereich geführt. Ebenso werden die von einem nicht dargestellten Objekt als Empfangslichtstrahlen 5 zurückreflektierten Sendelichtstrahlen 3 durch das Austrittsfenster 8 geführt.

Der als Lichttaster ausgebildete optische Sensor bildet ein binäres Schaltgerät, das heißt in der Auswerteeinheit 7 wird durch eine Schwellwertbewertung der Empfangssignale ein binäres Schaltsignal generiert, dessen Schaltzustände angeben, ob sich ein Objekt im Überwachungsbereich befindet oder nicht. Das Schaltsignal wird über einen nicht dargestellten Schaltausgang ausgegeben.

Weiterhin ist innerhalb des Gehäuses 2 ein Kunststoff-Spritzteil 9 vorgesehen, wobei Segmente dieses Kunststoff-Spritzteils 9 Optikelemente in Form von Fresnel-Linsen 9a, 9b bilden. Eine erste Fresnel-Linse 9a bildet eine Sendeoptik zur Strahlformung der Sendelichtstrahlen 3. Die zweite Fresnel-Linse 9b bildet eine Empfangsoptik zur Fokussierung der Empfangslichtstrahlen 5 auf den Empfänger 6.

Die Fresnel-Linsen 9a, 9b liegen dabei in einer Ebene, die im Wesentlichen senkrecht zu den Strahlachsen der Sendelichtstrahlen 3 und Empfangslichtstrahlen 5 verläuft.

Die Fresnel-Linsen 9a, 9b können prinzipiell auch versetzt zueinander angeordnet sein und in verschiedenen Ebenen liegen. Dabei können die Fresnel-Linsen 9a, 9b generell gleiche oder unterschiedliche Brennweiten aufweisen.

Die Figuren 2 bis 4 zeigen detailliert den Aufbau des Kunststoff-Spritzteils 9, welches im vorliegenden Fall aus Polycarbonat besteht.

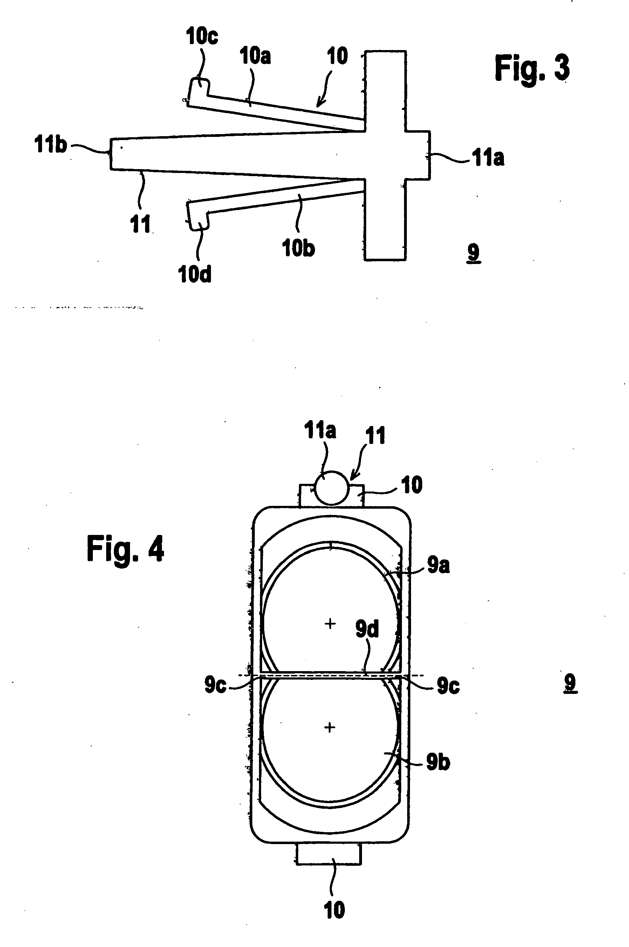

Wie aus den Figuren 2 und 4 ersichtlich, weisen die beiden Fresnel-Linsen 9a, 9b im wesentlichen identische Formen und Querschnittsflächen auf. Die Segmente, welche die Fresnel-Linsen 9a, 9b ausbilden, weisen jeweils eine rechteckige Querschnittsfläche auf. Die beiden Segmente sind über zwei Stege 9c verbunden, die Bestandteil des Kunststoff-Spritzteils 9 sind. Die Stege 9c sind an gegenüberliegenden längsseitigen Rändern des Kunststoff-Spritzteils 9 angeordnet. Zwischen den Stegen 9c verbleibt eine Aussparung, die eine Lücke 9d zwischen den Fresnel-Linsen 9a, 9b bildet und so zu einer optischen Trennung dieser Optikelemente führt. Prinzipiell können die Optikelemente auch durch einen durchgängigen Steg verbunden sein.

Zur Lagefixierung innerhalb des Gehäuses 2 weist das Kunststoff-Spritzteil 9 zwei Haltearme 10 auf. Jeweils ein Haltarm mündet am oberen und unteren Rand des Kunststoff-Spritzteils 9 aus. Die Haltearme 10 verlaufen senkrecht zur Ebene der Fresnel-Linsen 9a, 9b. Dabei stehen die Haltearme 10 über die Rückseiten der Fresnel-Linsen 9a, 9b hervor. Jeder Haltearm 10 ist gabelförmig und weist zwei Gabelarme 10a, 10b auf. An deren freien Enden ist jeweils eine Rastnase 10c, 10d angeordnet. Die so ausgebildeten Haltearme 10 bilden Rastmittel mittels derer das Kunststoff-Spritzteil 9 in einer Aufnahme im Gehäuse 2 des optischen Sensors 1 eingeclipst werden kann.

Das Kunststoff-Spritzteil 9 gemäß den Figuren 2 bis 4 weist als weiteres Optikelement einen Lichtleiter-Kanal 11 auf. Der ein weiteres Segment des Kunststoff-Spritzteils 9 bildende Lichtleiter-Kanal 11 mündet am oberen Rand des Kunststoff-Spritzteils 9 aus und schließt somit an die die Sendeoptik bildende Fresnel-Linse 9a an. Die Längsachse des Lichtleiter-Kanals 11 verläuft senkrecht zu den Ebenen der Fresnel-Linsen 9a, 9b. Ein Frontsegment des Lichtleiter-Kanals 11 steht geringfügig über die Vorderseiten der Fresnel-Linsen 9a, 9b hervor. Das Frontsegment ist durch eine ebene vordere Stirnfläche 11a abgeschlossen. Der Lichtleiter-Kanal 11 verjüngt sich kontinuierlich zu seinem hinteren Ende hin, welches mit einer ebenen hinteren Stirnfläche 11b abgeschlossen ist.

Zur Ausbildung einer Statusanzeige wird, wie in Figur 2 schematisch dargestellt, eine Leuchtdiode 12 an die hintere Stirnfläche 11b des Lichtleiter-Kanals 11 angesetzt. Von der Leuchtdiode 12 emittierte, nicht dargestellte Lichtstrahlen verlaufen innerhalb des Lichtleiter-Kanals 11 und münden dann an der vorderen Stirnseite 11a aus. Der Lichtleiter-Kanal 11 emittiert Lichtstrahlen im sichtbaren Bereich. Diese Lichtstrahlen sind an der vorderen Stirnfläche 11a an der Außenseite des Gehäuses 2 sichtbar, da der Lichtleiter-Kanal 11 im Bereich des Austrittsfensters 8 liegt. Die vordere Stirnfläche 11a bildet somit ein Anzeigeelement der Statusanzeige. Mit einer solchen Statusanzeige kann beispielsweise der Betriebszustand des optischen Sensors 1 signalisiert werden.

### Bezugszeichenliste

- (1): optischer Sensor
- (2): Gehäuse
- (3): Sendelichtstrahlen
- (4): Sender
- (5): Empfangslichtstrahlen
- (6): Empfänger
- (7): Auswerteeinheit
- (8): Austrittsfenster
- (9): Kunststoff-Spritzteil
- (9a): Fresnel-Linse
- (9b): Fresnal-Linse
- (9c): Stege
- (9d): Lücke
- (10): Haltearme
- (10a): Gabelarme
- (10b): Gabelarme
- (10c): Rastnase
- (10d): Rastnase
- (11): Lichtleiter-Kanal
- (11a): vordere Stirnfläche
- (11b): hintere Stirnfläche
- (12): Leuchtdiode

## Patentansprüche

1. Optischer Sensor (1) zur Erfassung von Objekten in einem Überwachungsbereich mit wenigstens einem Sendelichtstrahlen (3) emittierenden Sender (4), wenigstens einem Empfangslichtstrahlen (5) empfangenden Empfänger (6), mit einer Auswerteeinheit (7) zur Generierung eines Objektfeststellungssignals in Abhängigkeit von am Ausgang des Empfängers (6) anstehenden Empfangssignalen, und mit einem aus einem Kunststoff-Spritzteil (9) bestehenden Optikelement, wobei wenigstens ein erstes und ein zweites Segment des Optikelements jeweils wenigstens eine Fresnel-Linse (9a, 9b) zur Strahlformung der Sendelichtstrahlen (3) und/oder Empfangslichtstrahlen (5) bilden, **dadurch gekennzeichnet, dass** an das Optikelement ein mit diesem einstückig ausgebildeter Lichtleiter-Kanal (11) anschließt, an dessen hinterer Stirnfläche (11b) eine Leuchtdiode (12) angesetzt ist, so dass von der Leuchtdiode (12) emittierte sichtbare Lichtstrahlen im Lichtleiter-Kanal (11) geführt sind und an der vorderen Stirnfläche (11a) des Lichtleiter-Kanals (11) sichtbar sind, so dass die Stirnfläche (11) ein Anzeigeelement bildet.

2. Optischer Sensor (1) nach Anspruch 1, **dadurch gekennzeichnet, dass** das erste Segment des Optikelements eine Sendeoptik zur Strahlformung der Sendelichtstrahlen (3) bildet.

3. Optischer Sensor (1) nach Anspruch 1 oder 2, **dadurch gekennzeichnet, dass** das zweite Segment des Optikelements eine Empfangsoptik zur Fokussierung der Empfangslichtstrahlen (5) auf dem Empfänger (6) bildet.

4. Optischer Sensor (1) nach einem der Ansprüche 1 bis 3, **dadurch gekennzeichnet, dass** die Segmente des Optikelements über einen durchgehenden Steg (9c), welcher Bestandteil des Kunststoff-Spritzteils (9) ist, verbunden sind.

5. Optischer Sensor (1) nach einem der Ansprüche 1 bis 3, **dadurch gekennzeichnet, dass** die Segmente des Optikelements über zwei randseitige Stege (9c), die durch eine Lücke getrennt sind, verbunden sind, wobei die Stege (9c) Bestandteile des Kunststoff-Spritzteils (9) sind.

6. Optischer Sensor (1) nach einem der Ansprüche 1 bis 5, **dadurch gekennzeichnet, dass** an dem Optikelement einstückig mit diesem ausgebildete Haltearme (10) zur Fixierung des Kunststoff-Spritzteils (9) an Elementen an einem Gehäuse (2) des Sensors (1) oder innerhalb des Gehäuses (2) ausmünden.

7. Optischer Sensor nach Anspruch 6, **dadurch gekennzeichnet, dass** die Haltearme (10) an gegenüberliegenden Rändern des Kunststoff-Spritzteils (9) senkrecht zur Ebene des Optikelements ausmünden.

8. Optischer Sensor (1) nach Anspruch 6 oder 7, **dadurch gekennzeichnet, dass** die Haltearme (10) Rastmittel bilden.

9. Optischer Sensor (1) nach einem der Ansprüche 1 bis 8, **dadurch gekennzeichnet, dass** die Längsachse des Lichtleiter-Kanals (11) senkrecht zur Ebene des Optikelements verläuft.

10. Optischer Sensor (1) nach einem der Ansprüche 1 bis 9, **dadurch gekennzeichnet, dass** das Kunststoff-Spritzteil (9) aus Polycarbonat besteht.

11. Optischer Sensor (1) nach einem der Ansprüche 1 bis 9, **dadurch gekennzeichnet, dass** das Kunststoff-Spritzteil (9) aus PMMA besteht.

12. Optischer Sensor (1) nach einem der Ansprüche 1 bis 9, **dadurch gekennzeichnet, dass** dieser als Lichttaster, Reflexionslichtschranke oder als Distanzsensor ausgebildet ist.

## Claims

1. Optical sensor (1) for detecting objects in a monitoring region, comprising at least one transmitter (4) emitting transmitted light beams (3), at least one receiver (6) receiving received light beams (5), an evaluating unit (7) for generating an object detection signal in dependence on received signals present at the output of the receiver (6) and an optical element consisting of a plastics material injection-moulded part (9), wherein at least one first and second segment of the optical element each form at least one Fresnel lens (9a, 9b) for beam formation of the transmitted light beams (3) and/or received light beams (5), **characterised in that** connected with the optical element is an optical waveguide (11) which is integrally formed therewith and at the rear end surface (11 b) a light-emitting diode (12) is attached so that visible light beams emitted by the light-emitting diode (12) are conducted in the optical waveguide (11) and are visible at the front end surface (11a) of the optical waveguide (11) so that the end surface (11) forms an indicating element.

2. Optical sensor (1) according to claim 1, **characterised in that** the first segment of the optical element forms a transmitting optical system for beam formation of the transmitted light beams (3).

3. Optical sensor (1) according to claim 1 or 2, **characterised in that** the second segment of the optical element forms a receiving optical system for focusing the received light beams (5) on the receiver (6).

4. Optical sensor (1) according to any one of claims 1 to 3, **characterised in that** the segments of the optical element are connected by way of a continuous web (9c), which is a component of the injection-moulded plastics material part (9).

5. Optical sensor (1) according to any one of claims 1 to 3, **characterised in that** the segments of the optical element are connected by way of two webs (9c) which are at the edge and separated by a gap, wherein the webs (9c) are components of the injection-moulded plastics material part (9).

6. Optical sensor (1) according to any one of claims 1 to 5, **characterised in that**, at the optical element, retaining arms (10) formed integrally therewith for fixing the injection-moulded plastics material part (9) to elements open out at a housing (2) of the sensor (1) or within the housing (2).

7. Optical sensor according to claim 6, **characterised in that** the retaining arms (10) open out at opposite edges of the injection-moulded plastics material part (9) perpendicularly to the plane of the optical element.

8. Optical sensor (1) according to claim 6 or 7, **characterised in that** the retaining arms (10) form detent means.

9. Optical sensor (1) according to any one of claims 1 to 8, **characterised in that** the longitudinal axis of the optical waveguide (11) extends perpendicularly to the plane of the optical element.

10. Optical sensor (1) according to any one of claims 1 to 9, **characterised in that** the injection-moulded plastics material part (9) consists of polycarbonate.

11. Optical sensor (1) according to any one of claims 1 to 9, **characterised in that** the injection-moulded plastics material part (9) consists of PMMA.

12. Optical sensor (1) according to any one of claims 1 to 9, **characterised in that** this is constructed as a light sensor, reflective light barrier or distance sensor.

## Revendications

1. Capteur optique (1) servant à détecter des objets dans une zone de surveillance, comportant au moins un émetteur (4) émettant des rayons lumineux d'émission (3), au moins un récepteur (6) recevant des rayons lumineux de réception (5), une unité d'évaluation (7) servant à générer un signal de détection d'objet en fonction de signaux de réception présents à la sortie du récepteur (6), et un élément optique composé d'une pièce en matière plastique moulée par injection (9), au moins un premier et un deuxième segment de l'élément optique formant chaque fois au moins une lentille de Fresnel (9a, 9b) servant à mettre en forme le faisceau des rayons lumineux d'émission (3) et/ou des rayons lumineux de réception (5), **caractérisé en ce qu'**à l'élément optique se raccorde un canal photoconducteur (11) formé d'une seule pièce avec celui-ci, à la surface frontale arrière (11b) duquel est placée une diode luminescente (12) de façon que des rayons lumineux visibles émis par la diode luminescente (12) soient guidés dans le canal photoconducteur (11) et soient visibles à la surface frontale avant (11a) du canal photoconducteur (11) de sorte que la surface frontale (11) forme un élément d'affichage.

2. Capteur optique (1) selon la revendication 1, **caractérisé en ce que** le premier segment de l'élément optique forme une optique d'émission servant à mettre en forme le faisceau des rayons lumineux d'émission (3).

3. Capteur optique (1) selon la revendication 1 ou 2, **caractérisé en ce que** le deuxième segment de l'élément optique forme une optique de réception servant à focaliser les rayons lumineux de réception (5) sur le récepteur (6).

4. Capteur optique (1) selon l'une des revendications 1 à 3, **caractérisé en ce que** les segments de l'élément optique sont reliés par une branche continue (9c) qui fait partie intégrante de la pièce en matière plastique moulée par injection (9).

5. Capteur optique (1) selon l'une des revendications 1 à 3, **caractérisé en ce que** les segments de l'élément optique sont reliés par deux branches périphériques (9c) qui sont séparées par une lacune, les branches (9c) étant des éléments constitutifs de la pièce en matière plastique moulée par injection (9).

6. Capteur optique (1) selon l'une des revendications 1 à 5, **caractérisé en ce que** sur l'élément optique débouchent des bras de retenue (10) formés d'une seule pièce avec lui et servant à fixer la pièce en matière plastique moulée par injection (9) à des éléments sur un boîtier (2) du capteur (1) ou à l'intérieur du boîtier (2).

7. Capteur optique selon la revendication 6, **caractérisé en ce que** les bras de retenue (10) débouchent au niveau de bords opposés de la pièce en matière plastique moulée par injection (9), perpendiculairement au plan de l'élément optique.

8. Capteur optique (1) selon la revendication 6 ou 7, **caractérisé en ce que** les bras de retenue (10) forment des moyens d'encliquetage.

9. Capteur optique (1) selon l'une des revendications 1 à 8, **caractérisé en ce que** l'axe longitudinal du canal photoconducteur (11) s'étend perpendiculairement au plan de l'élément optique.

10. Capteur optique (1) selon l'une des revendications 1 à 9, **caractérisé en ce que** la pièce en matière plastique moulée par injection (9) est en polycarbonate.

11. Capteur optique (1) selon l'une des revendications 1 à 9, **caractérisé en ce que** la pièce en matière plastique moulée par injection (9) est en PMMA.

12. Capteur optique (1) selon l'une des revendications 1 à 9, **caractérisé en ce que** celui-ci est réalisé sous forme de détecteur photosensible, de barrière photoélectrique à réflexion ou de capteur de distance.
